# FASCICULE DE BREVET EUROPEEN

(11) **EP 2 390 184 B1**
(45) Date de publication et mention de la délivrance du brevet: **20.06.2012**
(21) Numéro de dépôt: 11003507.8
(22) Date de dépôt: 29.04.2011
(51) Int. Cl.: B64D 35/02, B64D 27/04, B64C 27/14

(54) **Installation motrice d'aéronef, aéronef et procédé pour utiliser un moteur à pistons dans une installation motrice munie d'une boite de transmission conventionelle**
Kraftanlage eines Luftfahrzeugs, Luftfahrzeug und Verfahren zur Benutzung eines Kolbenmotors in einer Kraftanlage, die mit einem konventionellen Getriebe ausgestattet ist
Aircraft powerplant, aircraft and method for using a piston engine in a powerplant provided with a conventional transmission unit

(30) Priorité: 31.05.2010 FR 1002282
(43) Date de publication de la demande: 30.11.2011
(73) Titulaire: EUROCOPTER, 13725 Marignane Cédex (FR)
(72) Inventeur: Chemin, Jérome, 38210 Tullins (FR); Manfredotti, Thomas, 06480 La Colle sur Loup (FR); Mercier, Christian, 13580 La Fare les Oliviers (FR)
(74) Mandataire: GPI & Associés

(56) Documents cités:
- WO-A1-01/90545
- GB-A- 358 789
- US-A1- 2003 089 822
- Dennis Raubenhaimer: "The Delta D2 - Australia's Diesel Helicopter", , 1 mai 2009 (2009-05-01), pages 046-053, XP002616911, Extrait de l'Internet: URL:http://www.deltahelicopters.com.au/pdf /HeliNews_May_2009_delta_D2.pdf [extrait le 2011-01-13]

## Description

La présente invention concerne une installation motrice d'un aéronef, un aéronef et plus particulièrement un giravion muni d'une installation motrice, et un procédé pour utiliser un moteur à pistons dans une installation motrice munie d'une boîte de transmission conventionnelle de puissance non prévue pour un tel moteur à pistons.

Notamment, l'invention se situe dans le domaine des moyens d'entraînement en rotation d'un rotor équipant ce giravion par un moteur à pistons, un moteur diesel notamment. Plus précisément, l'invention concerne un mécanisme d'atténuation des pulsations de couple mécanique entre un tel moteur et une boîte de transmission conventionnelle du rotor qui n'est pas prévue pour subir de telles pulsations de couple.

Les giravions sont généralement équipés d'au moins un rotor, qui est entraîné par une installation motrice pourvue d'un moteur à turbine et d'une boîte de transmission de puissance, ladite boîte de transmission de puissance étant interposée entre le moteur à turbine et le rotor. Il est à noter que l'on nomme dans la suite du texte par « boîte de transmission conventionnelle » une boîte de transmission de puissance adaptée pour un couplage à un moteur à turbine.

Or, pour des raisons écologiques par exemple, il peut être envisagé d'utiliser non pas un moteur à turbine mais un moteur à pistons. Bien que séduisante, une telle installation motrice nécessite à priori de redéfinir une boîte de transmission de puissance dédiée au moteur à pistons. En effet, à l'inverse d'un moteur à turbine, un moteur à pistons génère des pulsations de couple susceptibles de dégrader une boîte de transmission conventionnelle qui n'est par définition pas conçue pour subir de telles pulsations de couple.

De plus, ces pulsations de couple sont particulièrement importantes dans le cas d'espèce des giravions, en raison du poids de tels appareils qu'il est nécessaire de compenser pour les soulever et/ou les déplacer. Plus particulièrement, les moteurs diesel peuvent être utilisés pour l'entraînement des rotors, mais génèrent par leur architecture des pulsations de couple très importantes. L'auto-inflammation du combustible dans la chambre de combustion provoque une brusque montée en pression qui induit des pics de couple instantanés avec une réponse spectrale présentant des harmoniques de niveaux importants jusqu'à un rang élevé. De telles pulsations de couple transmises dans la chaîne de transmission mécanique entre un moteur et un rotor sont susceptibles de provoquer des ruptures en fatigue des organes composant cette chaîne de transmission, et notamment des organes d'une boîte de transmission conventionnelle.

Pour amortir de telles pulsations de couple, une première solution consiste à interposer entre un arbre moteur et un arbre récepteur un volant d'inertie, d'inertie importante pour amortir les pulsations de couple. Une telle solution présente l'avantage d'être simple à mettre en oeuvre, mais l'inconvénient d'induire un accroissement d'encombrement et de masse de la chaîne de transmission qu'il est nécessaire d'éviter dans le domaine des machines volantes telles que des giravions.

Une deuxième solution consiste à interposer un mécanisme de torsion entre un arbre moteur et un arbre récepteur. Couramment, un tel mécanisme exploite la capacité de torsion de l'un des arbres, et plus particulièrement l'arbre moteur, en lui conférant une relative souplesse. L'arbre de torsion permet d'absorber les pulsations de couple en adaptant son mode de résonance très en dessous de l'excitation provoquant les pulsations de couple. Une telle solution présente l'avantage d'être simple à mettre en oeuvre, mais nécessite d'avoir à exploiter un arbre d'une longueur et/ou d'une masse qui rendent rédhibitoire son exploitation dans le domaine des giravions. Un tel arbre de torsion ayant une capacité de torsion pour absorber des pulsations de couple est alors parfois dénommé « arbre long » par l'homme du métier, l'expression « arbre de torsion » étant cependant utilisée dans la suite du texte par commodité.

Le document GB 358789 envisage d'associer un arbre de torsion et un embrayage. Le document WO01/90545 monte un moteur comprenant un arbre de torsion avec toutes les caractéristiques du préamble de la revendication 1.

La présente invention telle que définie par les caractérisques techniques de la revendication 1, a alors pour objet une installation motrice munie d'un moteur à pistons et d'une boîte de transmission conventionnelle qui n'est pas dimensionnée en fatigue pour supporter les pulsations de couple générées par le moteur à pistons, cette installation motrice étant alors apte à être implémentée sur tous les giravions munis d'une telle boîte de transmission conventionnelle.

Selon l'invention, une installation motrice est munie d'un moteur à pistons entraînant une boîte de transmission conventionnelle dimensionnée pour un moteur à turbine, ce moteur à pistons comprenant une première rangée de pistons présentant une angulation avec une deuxième rangée de pistons. Le moteur à pistons est par exemple un moteur ayant huit cylindres en V, soit quatre cylindres contenus dans la première rangée et quatre cylindres contenus dans la deuxième rangée.

Cette installation motrice est remarquable en ce qu'elle comporte un arbre de torsion mis en mouvement par les pistons pour entraîner la boîte de transmission conventionnelle, l'arbre de torsion étant disposé par exemple entre la première rangée de pistons et la deuxième rangée de pistons.

Par suite, l'installation motrice comporte des organes de transmission afin que le moteur à pistons puisse mettre en mouvement la boîte de transmission. Parmi ces organes, on trouve donc un arbre de torsion agencé dans l'espace séparant la première rangée et la deuxième rangée, cet arbre de torsion étant lié à un vilebrequin du moteur à pistons directement ou indirectement.

L'arbre de torsion est ainsi dimensionné pour être contenu dans un espace relativement restreint.

De plus, les organes de transmission comprennent un volant d'inertie.

L'art antérieur tend à mettre en oeuvre soit des volants d'inertie soit des arbres de torsion ayant des dimensions rédhibitoires.

Cependant, l'invention va à l'encontre de ces techniques usuelles en mettant en oeuvre un arbre de torsion ayant des dimensions minimisées pour être disposé dans l'encombrement général du moteur à pistons et un volant d'inertie ayant des dimensions optimisées.

En effet, l'arbre de torsion filtre seulement une partie des pulsations de couple engendrées par le moteur à pistons, l'autre partie étant filtrée par le volant d'inertie la combinaison d'un tel volant d'inertie et d'un tel arbre de torsion permet d'obtenir un dispositif fiable relativement peu encombrant.

On peut alors utiliser un moteur à pistons sur un giravion existant, en agençant ce moteur à pistons en lieu et place d'un moteur à turbine, sans avoir à modifier la boîte de transmission.

L'installation motrice peut comprendre une ou plusieurs des caractéristiques qui suivent, selon les variantes mises en oeuvre.

Par exemple, l'installation motrice comporte un moyen de réglage de la vitesse de rotation relative entre une première vitesse de rotation de l'arbre de torsion et une deuxième vitesse de rotation du volant d'inertie. Le moyen de réglage instaure alors une deuxième vitesse de rotation supérieure à la première vitesse de rotation.

En effet, en maximisant la deuxième vitesse de rotation, on accroît l'efficacité du volant d'inertie. Augmenter la deuxième vitesse de rotation permet alors de réduire les dimensions et la masse d'un volant d'inertie.

De même, en minimisant la première vitesse de rotation, on accroît l'efficacité de l'arbre de torsion. Diminuer la première vitesse de rotation permet alors de réduire les dimensions et la masse de l'arbre de torsion.

Ainsi, le moyen de réglage peut comporter un réducteur de vitesse agencé en amont de l'arbre de torsion. Ce réducteur de vitesse peut comprendre au moins deux pignons pour minimiser la vitesse de l'arbre de torsion.

Ce réducteur est éventuellement disposé entre un vilebrequin du moteur à pistons et l'arbre de torsion. Par exemple, le réducteur est en prise directe sur le vilebrequin et sur l'arbre de torsion, le réducteur liant mécaniquement l'arbre de torsion au vilebrequin.

A titre de variante, le réducteur est optionnellement disposé entre le volant d'inertie et l'arbre de torsion.

De plus, le moyen de réglage peut comporter un multiplicateur de vitesse en amont du volant d'inertie. Ce multiplicateur possède avantageusement au moins deux pignons pour augmenter la deuxième vitesse de rotation du volant d'inertie par rapport aux organes tournants agencés en amont de ce volant d'inertie, l'arbre de torsion par exemple.

Selon un aspect, le multiplicateur est disposé entre le volant d'inertie et l'arbre de torsion.

Outre une installation motrice, l'invention vise un aéronef remarquable par l'incorporation d'une telle installation motrice. Par exemple, l'aéronef est un giravion conventionnel muni d'un moteur à pistons, du volant d'inertie et de l'arbre de torsion précité en lieu et place d'un moteur à turbine.

Enfin, l'invention a pour objet un procédé (revendication 9) pour utiliser un moteur à pistons dans une installation motrice conventionnelle au cours duquel, le moteur à pistons comprenant une première rangée de pistons présentant une angulation avec une deuxième rangée de pistons, le moteur à pistons entraînant une boîte de transmission conventionnelle par des organes de transmission munis d'un arbre de torsion et d'un volant d'inertie conformément à l'installation motrice selon l'invention. Au cours de ce procédé :
- on dimensionne l'arbre de torsion mis en mouvement par les pistons pour l'agencer entre la première rangée et la deuxième rangée de pistons, puis
- on dimensionne le volant d'inertie en fonction d'une raideur en torsion dudit arbre de torsion pour filtrer les pulsations de couple générées par ledit moteur à pistons.

Ainsi, on dimensionne le volant d'inertie en fonction du dimensionnement de l'arbre de torsion imposé par l'agencement de ce moteur à pistons dans un espace restreint.

L'invention et ses avantages apparaîtront avec plus de détails dans le cadre de la description qui suit avec des exemples de réalisation donnés à titre illustratif en référence aux figures annexées qui représentent :
- la figure 1, un schéma d'un aéronef selon l'invention,
- la figure 2, une coupe transversale schématique montrant l'agencement d'un arbre de torsion, et
- la figures 3, un schéma présentant une variante de l'invention, et
- la figure 4, un schéma présentant une autre variante de l'invention.

Les éléments présents dans plusieurs figures distinctes sont affectés d'une seule et même référence.

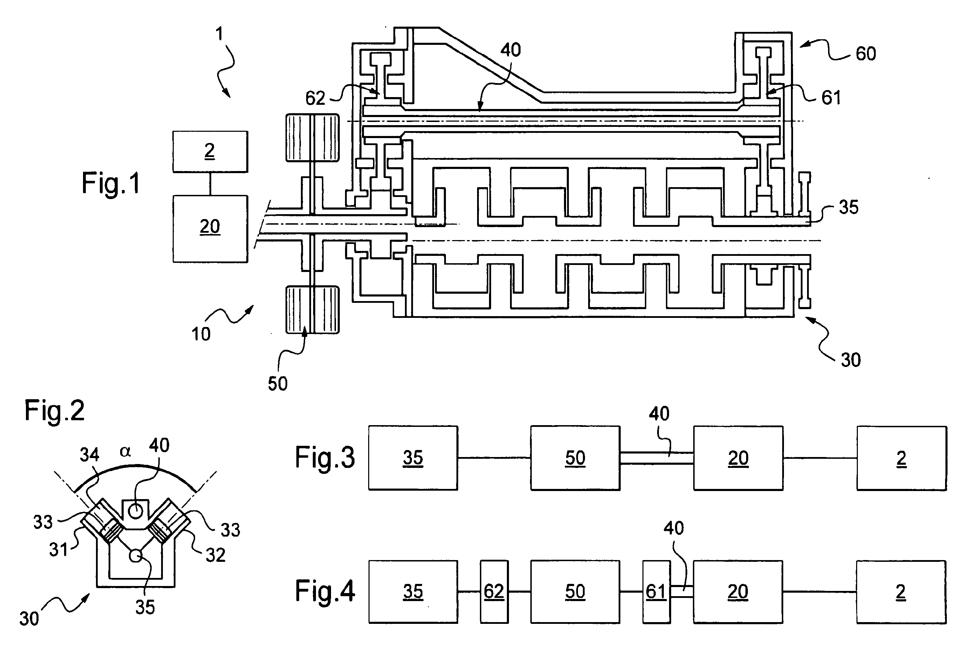

La figure 1 présente un aéronef 1 muni d'un rotor 2, une voilure tournante d'un giravion par exemple.

Cet aéronef 1 comprend de plus une installation motrice 10 apte à mettre en mouvement le rotor 2. L'installation motrice 10 comporte alors un moteur à pistons 30 et une boîte de transmission 20 conventionnelle, à savoir une boîte de transmission de puissance qui n'est pas spécifiquement dimensionnée pour supporter les pulsations de couple générées par un moteur à pistons. La boîte de transmission 20 conventionnelle est agencée entre le moteur à pistons 30 et le rotor 2.

Classiquement, le moteur à pistons comporte une pluralité de pistons non représentés sur la figure 1 reliés à un vilebrequin 35. Le vilebrequin 35 convertit alors la translation des pistons en un mouvement rotatif.

De plus, l'installation motrice 10 est pourvue d'organes de transmission reliant le vilebrequin 35 du moteur à pistons 30 à la boîte de transmission 20. Plus précisément, l'installation motrice 10 est pourvue d'un arbre de torsion 40 et d'un volant à inertie 50 filtrant conjointement les pulsations de couple générées par le moteur à pistons 30.

En référence à la figure 2, le moteur à pistons 30 comporte une première rangée 31 de pistons 33 coulissant chacun dans un cylindre de cette première rangée 31, et une deuxième rangée 32 de pistons 33 coulissant chacun dans un cylindre de cette deuxième rangée 32. La première rangée 31 et la deuxième rangée 32 sont séparées par une angulation α.

L'arbre de torsion 40 est alors disposé entre la première rangée 31 et la deuxième rangée 32 pour minimiser l'encombrement de l'installation motrice. L'arbre de torsion est alors agencé dans l'espace séparant la première rangée 31 de la deuxième rangée 32.

Sur l'exemple représenté, l'arbre de torsion 40 est disposé dans un carter du moteur à pistons 30. Toutefois, on comprend que l'arbre de torsion peut être situé à l'extérieur de ce carter, en restant néanmoins mécaniquement lié au vilebrequin 35. L'arbre de torsion n'est donc pas nécessairement un élément du moteur à pistons 30.

Pour utiliser un moteur à pistons conjointement avec une boîte de transmission 20 conventionnelle, on peut donc dans un premier temps dimensionner un arbre de torsion pour l'agencer entre la première rangée 31 et la deuxième rangée 32 du moteur à pistons.

On détermine alors la raideur en torsion de l'arbre de torsion ainsi dimensionné.

Par suite, on dimensionne un volant d'inertie en fonction de ladite raideur afin que le volant d'inertie et l'arbre de torsion filtrent les pulsations de couple générées le moteur à pistons 30, une partie des pulsations de couple étant filtrée par l'arbre de torsion et la partie restante de ces pulsations de couple étant filtrée par le volant d'inertie.

En référence à la figure 1, l'installation motrice peut être munie d'un moyen de réglage 60 de la vitesse de rotation relative entre une première vitesse de rotation V1 de l'arbre de torsion 40 et une deuxième vitesse de rotation V2 du volant d'inertie 50. Le moyen de réglage a notamment pour fonction de maintenir une deuxième vitesse de rotation V2 supérieure à la première vitesse de rotation V1.

Le moyen de réglage peut alors comporter un réducteur 61 de vitesse agencé en amont de l'arbre de torsion 40 pour ralentir la première vitesse de rotation V1.

De même, le moyen de réglage peut comporter un multiplicateur 62 de vitesse agencé en amont du volant d'inertie 50 pour augmenter la deuxième vitesse de rotation V2.

Le réducteur 61 et le multiplicateur 62 sont obtenus par exemple par le biais de pignons, en accord avec les techniques connues usuellement utilisées.

Selon la variante de la figure 1, on agence alors un réducteur 61 entre l'arbre de torsion 40 et le vilebrequin 35, le réducteur étant en prise avec l'arbre de torsion 40 et le vilebrequin 35. De plus, on agence un multiplicateur 62 entre l'arbre de torsion 40 et le volant d'inertie 50, le multiplicateur 62 étant en prise avec l'arbre de torsion 40 et le volant d'inertie 50.

En référence aux figures 3 et 4, le volant d'inertie 50 peut être disposé en amont de l'arbre de torsion 40, contrairement à la variante de la figure 1 qui prévoit d'agencer le volant d'inertie 50 en aval de l'arbre de torsion 40.

Conformément à la figure 3, si l'installation motrice ne nécessite pas l'implémentation d'un moyen de réglage, le volant d'inertie 50 est en prise sur le vilebrequin 35 et l'arbre de torsion 40, cet arbre de torsion 40 engrenant la boîte de transmission 20.

A l'inverse, en référence à la figure 4, un réducteur 61 peut être agencé entre le volant d'inertie 50 et l'arbre de torsion 40. De même, un multiplicateur 62 peut être agencé entre le volant d'inertie 50 et le vilebrequin 35.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Installation motrice (10) munie d'un moteur à pistons (30) entraînant une boîte de transmission (20) conventionnelle dimensionnée pour un moteur à turbine, ledit moteur à pistons (30) comprenant une première rangée (31) de pistons (33) présentant une angulation (α) avec une deuxième rangée (32) de pistons (33) et un volant d'inertie (50) **caractérisée en ce qu'**elle comporte un arbre de torsion (40) mis en mouvement par lesdits pistons (33) pour entraîner ladite boîte de transmission (20) conventionnelle, ledit arbre de torsion (40) étant disposé entre la première rangée (31) de pistons et la deuxième rangée (32) de pistons.

2. Installation motrice selon la revendication 1,
**caractérisée en ce qu'**elle comporte un moyen de réglage (60) de la vitesse de rotation relative entre une première vitesse de rotation (V1) dudit arbre de torsion (40) et une deuxième vitesse de rotation (V2) dudit volant d'inertie (50).

3. Installation motrice selon l'une quelconque des revendications précédentes,
**caractérisée en ce que** ledit moyen de réglage (60) comporte un réducteur (61) de vitesse agencé en amont dudit arbre de torsion (40).

4. installation motrice selon la revendication 3,
**caractérisée en ce que** ledit réducteur (61) est disposé entre un vilebrequin (35) dudit moteur à pistons (30) et ledit arbre de torsion (40).

5. Installation motrice selon la revendication 3,
**caractérisée en ce que** ledit réducteur (61) est disposé entre ledit volant d'inertie (50) et ledit arbre de torsion (40).

6. Installation motrice selon l'une quelconque des revendications 3 à 5,
**caractérisée en ce que** ledit moyen de réglage (60) comporte un multiplicateur de vitesse (62) en amont dudit volant d'inertie(50).

7. Installation motrice selon la revendication 6,
**caractérisée en ce que** ledit multiplicateur (62) est disposé entre ledit volant d'inertie (50) et ledit arbre de torsion (40).

8. Aéronef (1),
**caractérisé en ce qu'**il comporte une installation motrice (10) selon l'une quelconque des revendications précédentes pour entraîner un rotor (2).

9. Procédé pour utiliser un moteur à pistons (30) dans une installation motrice (10) munie d'une boîte de transmission (20) conventionnelle dimensionnée pour un moteur à turbine, ledit moteur à pistons (30) comprenant une première rangée (31) de pistons (33) présentant une angulation (α) avec une deuxième rangée (32) de pistons(33),
au cours duquel, ledit moteur à pistons (30) entraînant ladite boîte de transmission (20) conventionnelle par des organes de transmission munis d'un arbre de torsion (40) et d'un volant d'inertie (50), on dimensionne ledit arbre de torsion (40) mis en mouvement par lesdits pistons (33) pour l'agencer entre la première rangée (31) et la deuxième rangée (32) de pistons, puis on dimensionne le volant d'inertie (50) en fonction d'une raideur de torsion dudit arbre de torsion (40) pour filtrer les pulsations de couple générées par ledit moteur à pistons (30).

## Claims

1. Powerplant (10) provided with a piston engine (30) driving a conventional gearbox (20) dimensioned for a turbine engine, said piston engine (30) comprising a first row (31) of pistons (33) positioned at an angle (α) with respect to a second row (32) of pistons (33), and a flywheel (50),
**characterised in that** it includes a torsion shaft (40) set into motion by said pistons (33) to drive said conventional gearbox (20), said torsion shaft (40) being arranged between the first row (31) of pistons and the second row (32) of pistons.

2. Powerplant according to Claim 1,
**characterised in that** it includes adjustment means (60) for adjusting the relative speed of rotation between a first speed of rotation (V1) of said torsion shaft (40) and a second speed of rotation (V2) of said flywheel (50).

3. Powerplant according to either one of the preceding claims,
**characterised in that** said adjustment means (60) include a speed reducer (61) arranged upstream from said torsion shaft (40).

4. Powerplant according to Claim 3,
**characterised in that** said reducer (61) is arranged between a crankshaft (35) of said piston engine (30) and said torsion shaft (40).

5. Powerplant according to Claim 3,
**characterised in that** said reducer (61) is arranged between said flywheel (50) and said torsion shaft (40).

6. Powerplant according to any one of Claims 3 to 5,
**characterised in that** said adjustment means (60) include a speed multiplier (62) upstream from said flywheel (50).

7. Powerplant according to Claim 6,
**characterised in that** said multiplier (62) is arranged between said flywheel (50) and said torsion shaft (40).

8. Aircraft (1),
**characterised in that** it includes a powerplant (10) according to any one of the preceding claims for driving a rotor (2).

9. Method for using a piston engine (30) in a powerplant (10) provided with a conventional gearbox (20) dimensioned for a turbine engine, said piston engine (30) comprising a first row (31) of pistons (33) positioned at an angle (α) with respect to a second row (32) of pistons (33),
in which method said piston engine (30) drives said conventional gearbox (20) via transmission members provided with a torsion shaft (40) and a flywheel (50), said torsion shaft (40) set into motion by said pistons (33) being dimensioned so as to be arranged between the first row (31) and the second row (32) of pistons, and the flywheel (50) then being dimensioned as a function of a torsional stiffness of said torsion shaft (40) in order to filter the torque pulsations generated by said piston engine (30).

## Patentansprüche

1. Kraftanlage (10) mit einem Kolbenmotor (30), der ein konventionelles Getriebe (20) antreibt, welches für einen Turbinenmotor ausgelegt ist, wobei der Kolbenmotor (30) eine erste Reihe (31) von Kolben (33) aufweist, die mit einer zweiten Reihe (32) von Kolben (33) einen Winkel bildet, und mit einem Schwungrad (50), **gekennzeichnet durch**
eine Torsionswelle (40), die von den Kolben (33) bewegt wird, um das konventionelle Getriebe (20) anzutreiben, wobei die Torsionswelle (40) zwischen der ersten Kolbenreihe (31) und der zweiten Kolbenreihe (32) angeordnet ist.

2. Kraftanlage nach Anspruch 1,
**gekennzeichnet durch** ein Mittel (60) zum Regeln der relativen Drehgeschwindigkeit zwischen einer ersten Drehgeschwindigkeit (V1) der Torsionswelle (40) und einer zweiten Drehgeschwindigkeit (V2) des Schwungrads (50).

3. Kraftanlage nach einem der vorstehenden Ansprüche,
**dadurch gekennzeichnet, dass** das Mittel (60) zum Regeln ein Untersetzungsgetriebe (61) aufweist, welches der Torsionswelle (40) vorgeschaltet ist.

4. Kraftanlage nach Anspruch 3,
**dadurch gekennzeichnet, dass** das Reduktionsgetriebe (61) zwischen einer Kurbelwelle (35) des Kolbenmotors (30) und der Torsionswelle (40) angeordnet ist.

5. Kraftanlage nach Anspruch 3,
**dadurch gekennzeichnet, dass** das Reduktionsgetriebe (61) zwischen dem Schwungrad (50) und der Torsionswelle (40) angeordnet ist.

6. Kraftanlage nach einem der Ansprüche 3 bis 5,
**dadurch gekennzeichnet, dass** das Mittel (60) zum Regeln ein Übersetzungsgetriebe (62) aufweist, welches dem Schwungrad (50) vorgeschaltet ist.

7. Kraftanlage nach Anspruch 6,
**dadurch gekennzeichnet, dass** das Übersetzungsgetriebe (62) zwischen dem Schwungrad (50) und der Torsionswelle (40) angeordnet ist.

8. Luftfahrzeug (1),
**dadurch gekennzeichnet, dass** es eine Kraftanlage (10) nach einem der vorstehenden Ansprüche zum Antreiben eines Rotors (2) aufweist.

9. Verfahren zum Verwenden eines Kolbenmotors (30) in einer Kraftanlage (10) mit einem konventionellen Getriebe (20), welches für einen Turbinenmotor ausgelegt ist, wobei der Kolbenmotor (30) eine erste Reihe (31) von Kolben (33) aufweist, die mit einer zweiten Reihe (32) von Kolben (33) einen Winkel bildet, wobei, während der Kolbenmotor (30) das konventionelle Getriebe (20) über Übertragungsorgane antreibt, die mit einer Torsionswelle (40) und einem Schwungrad (50) versehen sind, die Torsionswelle (40), die von den Kolben (33) in Bewegung versetzt wird, so dimensioniert wird, dass sie zwischen der ersten Reihe (31) und der zweiten Reihe (32) von Kolben angeordnet wird, und das Schwungrad (50) in Abhängigkeit von einer Verbindungssteifigkeit der Torsionswelle (40) so dimensioniert wird, dass von dem Kolbenmotor (30) erzeugte Drehmomentschläge gefiltert werden.
